# EUROPEAN PATENT APPLICATION

(11) **EP 4 576 676 A1**
(43) Date of publication of application: **25.06.2025**
(21) Application number: 24222160.4
(22) Date of filing: 20.12.2024
(51) Int. Cl.: H04L 9/40

(54) **METHODS FOR CAPTURING RECONNAISSANCE TRAFFIC**

(30) Priority: 21.12.2023 US 202318393294
(71) Applicant: F5, INC., Seattle, WA 98104 (US)
(72) Inventor: MARTIN, Joseph L., Seattle (US)
(74) Representative: Savi, Massimiliano

(57) **Abstract**

Methods, non-transitory computer readable media, network traffic manager apparatuses, and systems that assist with capturing reconnaissance traffic includes detecting, using a listener, a receipt of a packet from a user at a destination port of a server and determining whether the packet is from a malicious user based on characteristics of the packet and services provided at the destination port. In response to determining that the packet is from the malicious user, the system can further include transmitting the packet to a honeypot process to capture reconnaissance of the packet. In some examples, the honeypot process can be configured to interact with the user.

## Description

This technology relates to methods and systems for directing packets from malicious users to honeypot processes to capture, log, and report reconnaissance traffic.

### BACKGROUND

Port spoofing is a malicious attack were a malicious user attempts to gain access to a network by sending traffic through a non-standard network port. For example, port 22 is the default port to handle SSH requests. Security tools assume SSH traffic will use port 22, and so most networks have advanced tools to keep port 22 secure. However, a malicious actor may send an SSH request through a different port (such as port 443) in order to gain access to the network.

When a port receives traffic for a service that it does not provide, most security tools cannot parse the request and in some cases may not even block the request. If the malicious request is not blocked, the attacker could plant malware, exfiltrate files, or even redirect internal database queries to external databases.

If the security tools manage to detect that the request was received at a non-standard port, traditional methods usually send the request to honeypot systems disconnected from the network to avoid infiltration. However, sophisticated malicious users tend to detect that the request is being handled by a honeypot system with a different IP address from the network.

As a result, a new method for accurately detecting requests arriving at non-standard ports and transmitting such requests to honeypot process for reconnaissance without the malicious user detecting the change is necessary.

### SUMMARY

A method implemented by a network traffic management system that includes detecting, using a listener, a receipt of a packet from a user at a destination port of a server and determining whether the packet is from a malicious user based on characteristics of the packet and services provided at the destination port. In response to determining that the packet is from the malicious user, the method can further include transmitting the packet to a honeypot process to capture reconnaissance of the packet. In some examples, the honeypot process can be configured to interact with the user.

A network traffic management device includes a memory including programmed instructions stored thereon and one or more processors configured to be capable of executing the stored programmed instructions to detect, using a listener, a receipt of a packet from a user at a destination port of a server and determine whether the packet is from a malicious user based on characteristics of the packet and services provided at the destination port. In response to determining that the packet is from the malicious user, the one or more processors can be further configured to transmit the packet to a honeypot process to capture reconnaissance of the packet. In some examples, the honeypot process can be configured to interact with the user.

A non-transitory computer readable medium having stored thereon instructions for including executable code that, when executed by one or more processors, causes the processors to detect, using a listener, a receipt of a packet from a user at a destination port of a server and determine whether the packet is from a malicious user based on characteristics of the packet and services provided at the destination port. In response to determining that the packet is from the malicious user, the one or more processors can be further configured to transmit the packet to a honeypot process to capture reconnaissance of the packet. In some examples, the honeypot process can be configured to interact with the user.

A network traffic management system with memory comprising programmed instructions stored thereon, and one or more processors configured to be capable of executing the stored programmed instructions to detect, using a listener, a receipt of a packet from a user at a destination port of a server and determine whether the packet is from a malicious user based on characteristics of the packet and services provided at the destination port. In response to determining that the packet is from the malicious user, the one or more processors can be further configured to transmit the packet to a honeypot process to capture reconnaissance of the packet. In some examples, the honeypot process can be configured to interact with the user.

This technology provides a number of advantages including providing methods, non-transitory computer readable media, network traffic management devices, and network traffic management systems that can use an automatically created listener to detect malicious traffic and provide multi-protocol honeypot processes for any legitimate service for a network that is masked using the same IP address as the network to capture reconnaissance from sophisticated, malicious users.

### BRIEF DESCRIPTION OF THE DRAWINGS

FIG. 1 is an block diagram of an exemplary system architecture with a network traffic manager apparatus;
FIG. 2 is a flow diagram of an exemplary method for capturing reconnaissance from malicious traffic; and
FIG. 3 is an sequence diagram of an exemplary method for directing traffic to honeypot processes and servers.

### DETAILED DESCRIPTION

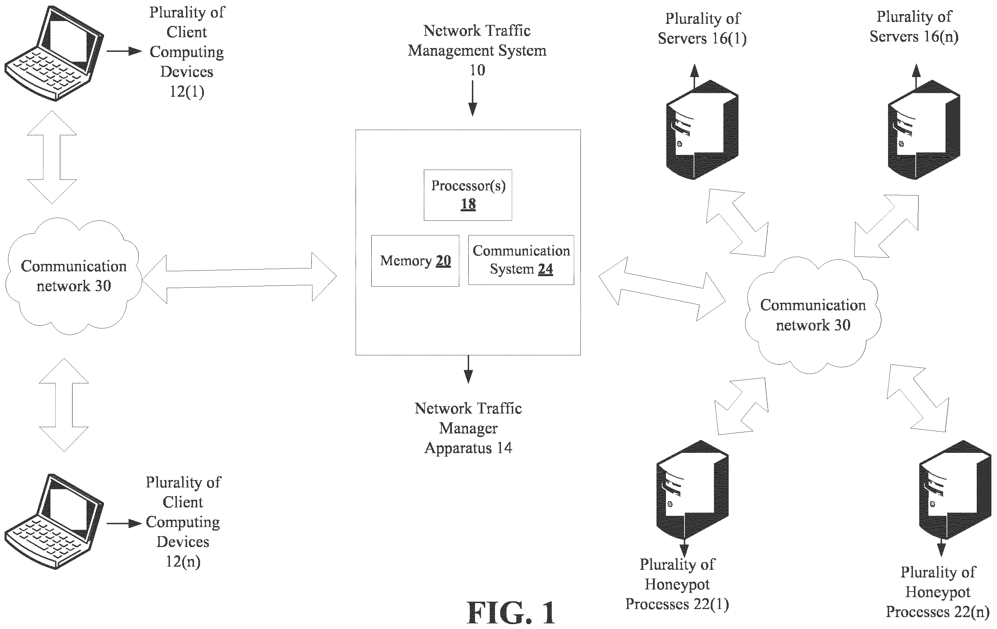

An example of a network environment 10 which incorporates a network traffic management system 10 for directing legitimate traffic to a plurality of servers 16(1)-16(n) and malicious traffic to a plurality of honeypot processes 22(1)-22(n) with the network traffic manager apparatus 14 is illustrated in FIG. 1. The exemplary environment includes a plurality of client computing devices 12(1)-12(n), a network traffic manager apparatus 14, the plurality of servers 16(1)-16(n), and the plurality of honeypot processes 22(1)-22(n) which are coupled together by communication networks 30, although the environment can include other types and numbers of systems, devices, components, and/or elements and in other topologies and deployments.

Referring more specifically to FIG. 1, the network traffic manager apparatus 14 of the network traffic management system is coupled to the plurality of client computing devices 12(1)-12(n) through the communication network 30, although the plurality of client computing devices 12(1)-12(n) and network traffic manager apparatus 14 may be coupled together via other topologies. Additionally, the network traffic manager apparatus 14 is coupled to the plurality of servers 16(1)-16(n) and/or a plurality of honeypot processes 22(1)-22(n) through the communication network 30, although the plurality of servers 16(1)-16(n) and/or a plurality of honeypot processes 22(1)-22(n) and the network traffic manager apparatus 14 may be coupled together via other topologies. While not shown, the exemplary environment may include additional network components, such as routers, switches, and other devices, which are well known to those of ordinary skill in the art and thus will not be described here. The communication network 30 can be a wide area network (WAN) or a local area network (LAN). Other network devices configured to generate, send, and receive network communications can be used.

In one such example, at least one network traffic management apparatus 14 is disposed on a client side of a WAN as associated with a LAN connecting many client computing devices 12(l)-12(n). Although network traffic management apparatus 14 is shown in this example, the environment may be coupled in other configurations.

The network traffic manager apparatus 14 assists with directing traffic as illustrated and described by way of the examples herein, although the network traffic manager apparatus 14 may perform other types and/or numbers of functions. As an example, the network traffic manager apparatus 14 may perform directing the network traffic between the client computing devices 12(1)-12(n) and the plurality of servers 16(1)-16(n) and/or a plurality of honeypot processes 22(1)-22(n). As illustrated in FIG. 1, the network traffic manager apparatus 14 includes at least one processor or central processing unit (CPU) 18, memory 20, and a communication system 24 which are coupled together by a bus device although the network traffic manager apparatus 14 may comprise other types and numbers of elements in other configurations. In this example, the bus is a PCI Express bus in this example, although other bus types and links may be used.

Each of the client computing devices 12(l)-12(n), each of the plurality of servers 16(l)-16(n), and a plurality of honeypot processes 22(1)-22(n) include a central processing unit (CPU) or processor 18, a memory 22, an interface device, and an I/O system, which are coupled together by a bus or other link, although other numbers and types of network devices could be used. The client computing devices 12(l)-12(n) may run interface applications, such as Web browsers, that may provide an interface to make requests for and send content and/or data to applications or services provided by the plurality of servers 16(l)-16(n) or the plurality of honeypot processes 22(1)-22(n) via the communication network 30, LANs and/or WAN using the network traffic manager apparatus 14.

In some examples, the network traffic manager apparatus 14 can be a proxy that sits between the plurality of servers 16(1)-16(n), the plurality of honeypot processes 22(1)-22(n), and the plurality of client computing devices 12(1)-12(n). In one example, the proxy may be a third-party interposed between one of the plurality of client computing devices 12(1)-12(n), one of the plurality of honeypot processes 22(1)-22(n) and one of the plurality of servers 16(1)-16(n) (or network traffic manager apparatus 14). Generally, the plurality of servers 16(l)-16(n) process requests received from the network traffic manager apparatus 14, that is sent to the network traffic manager apparatus 14 from the client computing devices 12(l)-12(n) via the communication network 30 such as the LANs and/or WAN according to the HTTP-based application RFC protocol or the CIFS or NFS protocol for example. Various network processing applications, such as CIFS applications, NFS applications, HTTP Web Server computing device applications, and/or FTP applications, may be operating on the plurality of servers 16(l)-16(n) and transmitting data (e.g., files, Web pages) to the network traffic manager apparatus 14 in response to requests from the network traffic manager apparatus 14. The plurality of honeypot processes 22(1)-22(n) can also process requests and send logs to the network traffic manager apparatus 14 via the communication network 30 such as the LANs and/or WAN according to the HTTP-based application RFC protocol or the CIFS or NFS protocol for example.

The processors 18 within the network traffic manager apparatus 14 may execute one or more computer-executable instructions stored in memory 20 for the methods illustrated and described with reference to the examples herein, although the processor 18 can execute other types and numbers of instructions and perform other types and numbers of operations. The processor 18 may comprise one or more central processing units ("CPUs") or general purpose processors with one or more processing cores, such as AMD^{®} processor(s), although other types of processor(s) could be used (e.g., Intel^{®}).

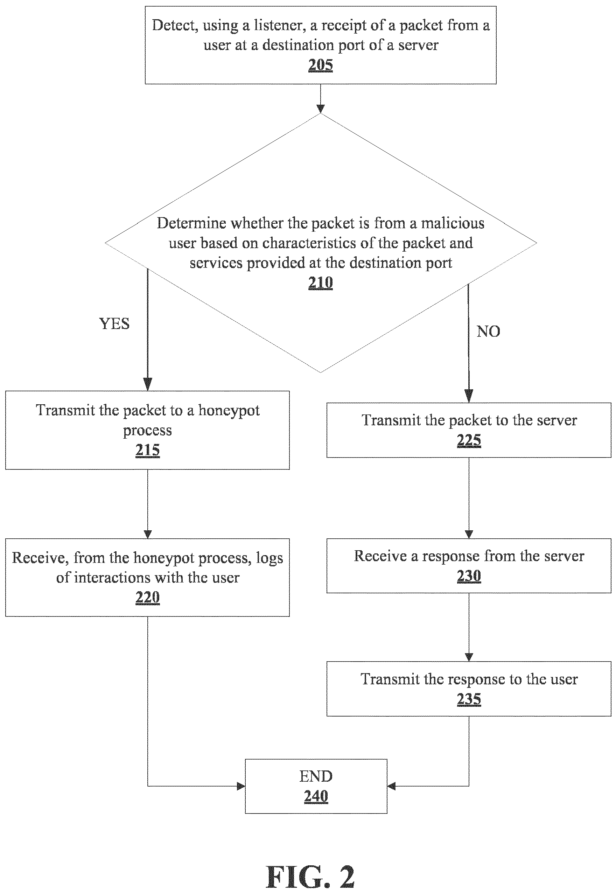

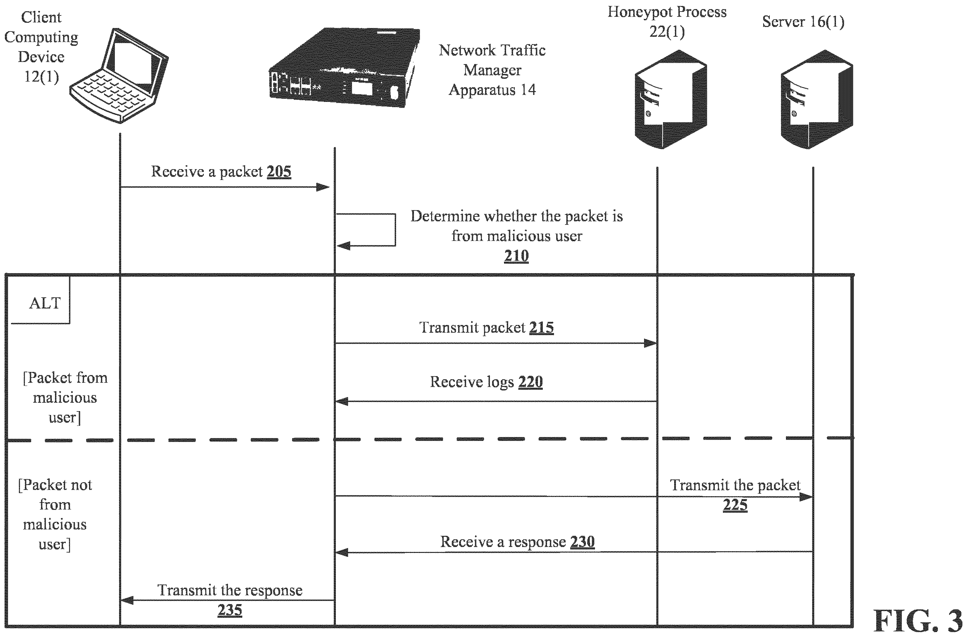

The memory 20 within the network traffic manager apparatus 14 may comprise one or more tangible storage media, such as RAM, ROM, flash memory, CD-ROM, floppy disk, hard disk drive(s), solid state memory, DVD, or any other memory storage types or devices, including combinations thereof, which are known to those of ordinary skill in the art. The memory 20 may store one or more non-transitory computer-readable instructions of this technology as illustrated and described with reference to the examples herein that may be executed by the processor 18. The exemplary flows and sequences shown in FIGS. 2 and 3 are representative of example steps or actions of this technology that may be embodied or expressed as one or more non-transitory computer or machine readable instructions stored in the memory 20 that may be executed by the processor 18.

Accordingly, the memory 20 of the network traffic manager apparatus 14 can store one or more applications that can include computer executable instructions that, when executed by the network traffic manager apparatus 14, causes the network traffic manager apparatus 14 to perform actions, such as to transmit, receive, or otherwise process messages, for example, and to perform other actions described and illustrated below with reference to FIGS. 2 and 3. The application(s) can be implemented as module or components of another application. Further, the application(s) can be implemented as operating system extensions, module, plugins, or the like. The application(s) can be implemented as module or components of another application. Further, the application(s) can be implemented as operating system extensions, module, plugins, or the like. Even further, the application(s) may be operative in a cloud-based computing environment. The application(s) can be executed within virtual machine(s) or virtual server(s) that may be managed in a cloud-based computing environment. Also, the application(s), including the network traffic manager apparatus 14 itself, may be located in virtual server(s) running in a cloud-based computing environment rather than being tied to one or more specific physical network computing devices. Also, the application(s) may be running in one or more virtual machines (VMs) executing on the network traffic manager apparatus 14. Additionally, in at least one of the various examples, virtual machine(s) running on the network traffic manager apparatus 14 may be managed or supervised by a hypervisor.

The communication system in the network traffic manager apparatus 14 is used to operatively couple and communicate between the network traffic manager apparatus 14, the plurality of client computing devices 12(1)-12(n), the plurality of honeypot processes 22(1)-22(n), and the plurality of servers 16(1)-16(n) which are all coupled together by communication network 30 such as one or more local area networks (LAN) and/or the wide area network (WAN), although other types and numbers of communication networks 30 or systems with other types and numbers of connections and configurations to other devices and elements may be used. By way of example only, the communication network 30 such as local area networks (LAN) and the wide area network (WAN) can use TCP/IP over Ethernet and industry-standard protocols, including NFS, CIFS, SOAP, XML, LDAP, and SNMP, although other types and numbers of communication networks, can be used. In this example, the bus is a PCI Express bus in this example, although other bus types and links may be used. The LANs in this example may employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like. The WAN may comprise any wide area network (e.g., Internet), although any other type of traffic network topology may be used.

Each of the plurality of client computing devices 12(1)-12(n) of the network traffic management system 10, include a central processing unit (CPU) or processor 18, a memory, input/display device interface, and an input/output system or I/O system, which are coupled together by a bus or other link. The plurality of client computing devices 12(1)-12(n), in this example, may run interface applications that may provide an interface to make requests for and send and/or receive data to and/or from the plurality of servers 16(1)-16(n) via the network traffic manager apparatus 14. Additionally, the plurality of client computing devices 12(1)-12(n) can include any type of computing device that can receive, render, and facilitate user interaction, such as client computers, network computer, mobile computers, mobile phones, virtual machines (including cloud-based computer), or the like. Each of the plurality of client computing devices 12(1)-12(n) utilizes the network traffic manager apparatus 14 to conduct one or more operations with the plurality of servers 16(1)-16(n) or the plurality of honeypot processes 22(1)-22(n).

Each of the plurality of servers 16(1)-16(n) of the network traffic management system include a central processing unit (CPU) or processor 18, a memory, and a communication system 24, which are coupled together by a bus or other link, although other numbers and/or types of network devices could be used. Generally, the plurality of servers 16(1)-16(n) may include any computing device capable of communicating packets to another network device. Each packet may convey a piece of information. A packet may be sent for handshaking, e.g., to establish a connection or to acknowledge receipt of data. The packet may include information such as a request, a response, or the like. Generally, packets received by the plurality of servers 16(1)-16(n) may be formatted according to TCP/IP, but they could also be formatted using another protocol, such as SCTP, X.25, NetBEUI, IPX/SPX, token ring, similar IPv4/6 protocols, and the like. Moreover, the packets may be communicated between the plurality of servers 16(1)-16(n), the plurality of client computing devices 12(1)-12(n), and the network traffic management system 10 employing HTTP, HTTPS, and the like. It is to be understood that the plurality of servers 16(1)-16(n) may be hardware or software or may represent a system with multiple external resource servers, which may include internal or external networks. In one example, the plurality of servers 16(1)-16(n) are configured to operate as a website server. However, the plurality of servers 16(1)-16(n) are not limited to web server devices, and may also operate a messaging server, a File Transfer Protocol (FTP) server, a database server, content server, and the like. Additionally, each of the plurality of servers 16(1)-16(n) may be configured to perform a different operation. Thus, for example, server 16(1) may be configured as a messaging server, while server 16(n) is configured as a database server. Moreover, while the plurality of servers 16(1)-16(n) may operate as other than a website, they may still be enabled to receive an HTTP communication or a TLS communication. Devices that may operate as plurality of servers 16(1)-16(n) include personal computers, desktop computers, multiprocessor systems, microprocessor-based or programmable consumer electronics, network PCs, server devices, and the like.

Although the plurality of servers 16(1)-16(n) are illustrated as single servers, each of the plurality of servers 16(1)-16(n) may be distributed across one or more distinct network computing devices. Moreover, the plurality of servers 16(1)-16(n) are not limited to a particular configuration. Thus, the plurality of servers 16(1)-16(n) may contain a plurality of network computing devices that operate using a master/slave approach, whereby one of the network computing devices of the plurality of servers 16(1)-16(n) operate to manage and/or otherwise coordinate operations of the other network computing devices. The plurality of servers 16(1)-16(n) may operate as a plurality of network computing devices within cluster architecture, a peer-to peer architecture, virtual machines, or within a cloud architecture. The plurality of servers 16(1)-16(n) can include a processing unit, video display adapters, and a mass memory, all in communication with each other via a bus. The mass memory generally includes RAM, ROM, and one or more permanent mass storage devices, such as hard disk drive, tape drive, CD-ROM/DVD-ROM drive, and/or floppy disk drive. The mass memory can store an operating system for controlling the operation of the plurality of servers 16(1)-16(n). Any general-purpose operating system may be employed. Basic input/output system ("BIOS") can be also provided for controlling the low-level operation of the plurality of servers 16(1)-16(n). The plurality of servers 16(1)-16(n) also can communicate with the Internet, or some other communications network, via network interface unit 310, which is constructed for use with various communication protocols including the TCP/IP protocol.

The plurality of servers 16(1)-16(n) can include server ports such as physical ports and logical ports (i.e., virtual ports). The physical ports can connect other network devices such as Ethernet ports, LAN ports, and USB ports. Other network devices that can connect to the physical ports can be ADSL modems, hubs, switches, routers, etc. The virtual ports can be configured to handle TCP/IP protocol and services and can each have a port number that can range from zero (0) to sixtyfive thousand five hundred and thirty-five (65535). Each of the virtual ports can be configured to handle the services according to standards. For example, port number 22, 80, and 443 are ports that are commonly open and configured to handle TCP protocol services (i.e., port 22 can handle SSH services, port 80 can handle web services, port 443 can handle HTTPS services, etc.).

Each of the plurality of honeypot processes 22(1)-22(n) of the network traffic management system include a central processing unit (CPU) or processor 18, a memory, and a communication system 24, which are coupled together by a bus or other link, although other numbers and/or types of network devices could be used. Generally, the plurality of honeypot processes 22(1)-22(n) may include any computing device capable of communicating with another network device. The plurality of honeypot processes 22(1)-22(n) may be setup as a decoy to lure malicious attackers and detect and log the hacking attempts from the malicious attackers. The plurality of honeypot processes 22(1)-22(n) may be configured to respond to protocol requests and to send responses sent for handshaking, e.g., to establish a connection or to acknowledge receipt of data. Malicious packets may include information such as a request, a response, or the like. Generally, packets received by the plurality of honeypot processes 22(1)-22(n) may be formatted according to TCP/IP, but they could also be formatted using another protocol, such as SCTP, X.25, NetBEUI, IPX/SPX, token ring, similar IPv4/6 protocols, and the like. The plurality of honeypot processes 22(1)-22(n) may be coupled to the network traffic manager apparatus 14 and configured to transmit logs of any received packets or generated responses sent to or from the plurality of client computing devices 12(1)-12(n) through the communication network 30. It is to be understood that the plurality of honeypot processes 22(1)-22(n) may be hardware or software or may represent a system with multiple external resource servers, which may include internal or external networks. In one example, the plurality of honeypot processes 22(1)-22(n) are configured to operate as a website server. However, the plurality of honeypot processes 22(1)-22(n) are not limited to web server devices, and may also operate a messaging server, a File Transfer Protocol (FTP) server, a database server, content server, and the like. Additionally, each of the plurality of honeypot processes 22(1)-22(n) may be configured to perform a different operation.

Although the plurality of honeypot processes 22(1)-22(n) are illustrated as single servers, each of the plurality of honeypot processes 22(1)-22(n) may be distributed across one or more distinct network computing devices. Moreover, the plurality of honeypot processes 22(1)-22(n) are not limited to a particular configuration. Thus, the plurality of honeypot processes 22(1)-22(n) may contain a plurality of network computing devices that operate using a master/slave approach, whereby one of the network computing devices of the plurality of honeypot processes 22(1)-22(n) operate to manage and/or otherwise coordinate operations of the other network computing devices. The plurality of honeypot processes 22(1)-22(n) may operate as a plurality of network computing devices within cluster architecture, a peer-to peer architecture, virtual machines, or within a cloud architecture.

The plurality of honeypot processes 22(1)-22(n) can communicate directly with the plurality of client computing devices 12(1)-12(n) to avoid potential exposure of the network traffic manager apparatus 14 or the plurality of servers 16(1)-16(n). The plurality of honeypot processes 22(1)-22(n) can simulate the behavior of a real system and be isolated from remaining parts of the network traffic management system 10. The plurality of honeypot processes 22(1)-22(n) can have similar features to a server to simulate a real server (such as an IP address, etc.). The plurality of honeypot processes 22(1)-22(n) can include a processing unit, video display adapters, and a mass memory, all in communication with each other via a bus. The mass memory generally includes RAM, ROM, and one or more permanent mass storage devices, such as hard disk drive, tape drive, CD-ROM/DVD-ROM drive, and/or floppy disk drive. The mass memory can store an operating system for controlling the operation of the plurality of honeypot processes 22(1)-22(n). Any general-purpose operating system may be employed. Basic input/output system ("BIOS") can be also provided for controlling the low-level operation of the plurality of honeypot processes 22(1)-22(n). The plurality of honeypot processes 22(1)-22(n) also can communicate with the Internet, or some other communications network, via network interface unit 310, which is constructed for use with various communication protocols including the TCP/IP protocol.

Thus, the technology disclosed herein is not to be construed as being limited to a single environment and other configurations and architectures are also envisaged. For example, the one or more of the plurality of servers 16(1)-16(n) or the plurality of honeypot processes 22(1)-22(n) depicted in FIG. 1 can operate within network traffic manager apparatus 14 rather than as a stand-alone server communicating with network traffic manager apparatus 14 via the communication network(s) 30. In this example the plurality of servers 16(1)-16(n) and the plurality of honeypot processes 22(1)-22(n) operate within the memory 20 of the network traffic manager apparatus 14. Additionally, as illustrated in FIG. 3, one of the plurality of servers (16)(1)-16(n) and one of the plurality of honeypot processes 22(1)-22(n) can be used to implement the technology disclosed herein.

While the network traffic manager apparatus 14 is illustrated in this example as including a single device, the network traffic manager apparatus 14 in other examples can include a plurality of devices or blades each with one or more processors 18 each processor 18 with one or more processing cores that implement one or more steps of this technology. In these examples, one or more of the devices can have a dedicated communication interface or memory. Alternatively, one or more of the devices can utilize the memory, communication interface, or other hardware or software components of one or more other communicably coupled of the devices. Additionally, one or more of the devices that together comprise network traffic manager apparatus 14 in other examples can be standalone devices or integrated with one or more other devices or applications, plurality of servers 16(1)-16(n), the plurality of honeypot processes 22(1)-22(n), or the network traffic manager apparatus 14, or applications coupled to the communication network(s) 30, for example. Moreover, one or more of the devices of the network traffic manager apparatus 14 in these examples can be in a same or a different communication network 30 including one or more public, private, or cloud networks, for example.

Although an exemplary network traffic management system 10 with the plurality of client computing devices 12(1)-12(n), the network traffic manager apparatus 14, the plurality of honeypot processes 22(1)-22(n), and the plurality of servers 16(1)-16(n), communication networks 30, LANS, WAN, are described and illustrated herein, other types and numbers of systems, devices, blades, components, and elements in other topologies can be used. It is to be understood that the systems of the examples described herein are for exemplary purposes, as many variations of the specific hardware and software used to implement the examples are possible, as will be appreciated by those skilled in the relevant art(s).

Further, each of the systems of the examples may be conveniently implemented using one or more general purpose computer systems, microprocessors, digital signal processors, and micro-controllers, programmed according to the teachings of the examples, as described, and illustrated herein, and as will be appreciated by those of ordinary skill in the art.

One or more of the components depicted in the network traffic management system, such as the network traffic manager apparatus 14, the plurality of client computing devices 12(1)-12(n), the plurality of honeypot processes 22(1)-22(n), the plurality of servers 16(1)-16(n), for example, may be configured to operate as virtual instances on the same physical machine. In other words, one or more of network traffic manager apparatus 14, the plurality of client computing devices 12(1)-12(n), the plurality of honeypot processes 22(1)-22(n), or the plurality of servers 16(1)-16(n) illustrated in FIG. 1 may operate on the same physical device rather than as separate devices communicating through a network as depicted in FIG. 1. There may be more or fewer plurality of client computing devices 12(1)-12(n), network traffic manager apparatus 14, the plurality of honeypot processes 22(1)-22(n), or the plurality of servers 16(1)-16(n) than depicted in FIG. 1. The plurality of client computing devices 12(1)-12(n), the plurality of honeypot processes 22(1)-22(n), or the plurality of servers 16(1)-16(n) could be implemented as applications on network traffic manager apparatus 14.

In addition, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only teletraffic in any suitable form (e.g., voice and modem), wireless traffic media, wireless traffic networks, cellular traffic networks, G3 traffic networks, Public Switched Telephone Network (PSTNs), Packet Data Networks (PDNs), the Internet, intranets, and combinations thereof.

The examples may also be embodied as a non-transitory computer readable medium having instructions stored thereon for one or more aspects of the technology as described and illustrated by way of the examples herein, which when executed by a processor (or configurable hardware), cause the processor to carry out the steps necessary to implement the methods of the examples, as described and illustrated herein.

An example of a method for capturing reconnaissance traffic will now be described with reference to FIGS. 2 and 3. First in step 205, the network traffic manager apparatus 14 detects, using a listener, a receipt of a packet from a user at one of the plurality of client computing devices 12(1)-12(n) at a destination port of one of the plurality of servers 16(1)-16(n). The listener can be created automatically when the server at one of the plurality of servers 16(1)-16(n) is created by an administrator and the listener can be an all ports listener configured to detect traffic directed to ports of the server at one of the plurality of servers 16(1)-16(n). In some examples, the listener can detect traffic directed to certain ports instead of all the ports of a server at one of the plurality of servers 16(1)-16(n). The listener would be able to detect incoming traffic (legitimate and malicious) that goes through a port of the plurality of servers 16(1)-16(n).

In some examples, the request can be a security handshake from the one of the client computing devices 12(1)-12(n). The security handshake in some examples can be received for establishing a connection to a server. In some examples, the security handshake can be a Transmission Control Protocol (TCP) handshake or Internet Protocol (IP) handshake for establishing a Secure Shell (SSH) protocol connection to a server. A SSH connection is a connection that is secured by cryptographic information. The SSH protocol may utilize Transport Control Protocol/Internet Protocol (TCP/IP) on behalf of the application layer protocols to transport secure data. A SSH session refers to a secure session between two endpoints, wherein the session is secured using the TCP/IP protocol. Although an SSH session is generally described herein as being established between one of the client computing devices 12(1)-12(n) and one of the servers 16(1)-16(n) over a communication network 30, it should be understood that a SSH session may be established between virtually any types of network devices enabled to employ the TCP/IP protocol. The SSH protocol uses a series of SSH handshakes (i.e., an TLS handshake protocol) to initiate a SSH session. The SSH protocol uses a series of SSH handshakes (i.e., an SSH handshake protocol) to initiate an SSH session.

In this example, the one of the client computing devices 12(1)-12(n) can transmit the request to a port (i.e., the destination port) of the one of the plurality of servers 16(1)-16(n). There are standard ports used for certain services. For example, port 22 is the default port for SSH services, port 21 is the default port for File Transfer Protocol (FTP) services, port 80 is the default port for Hypertext Transfer Protocol (HTTP) services, port 143 is the default port for Internet Message Access Protocol (IMAP) services, port 443 is the default port for HTTPS services, etc. There are additional ports with default services known in the art.

In step 210, the network traffic manager apparatus 14 determines whether the packet is from a malicious user at one of the plurality of client computing devices 12(1)-12(n) based on characteristics of the packet and services provided at the destination port. For example, if the packet is an SSH request then the characteristics of the packet can include data for SSH services such as a source IP address, header, SSH fingerprint, a key pair, attempted username, attempted password, commands, file uploads, or combinations thereof. Additionally, the network traffic manager apparatus 14 can determine the services provided at the destination port based on the port number (each port number has a corresponding default known in the art). In this example, if the packet is an SSH request and is sent to port 443 (which is the default port for HTTPS services and not for SSH services), then the network traffic manager apparatus 14 can compare the type of request to the services provided at the destination port and determine that the type of request does not contain the proper characteristics for HTTPS services at the destination port (port 443) and instead is for SSH services. Based on this comparison, the network traffic manager apparatus 14 can determine that the packet is from a malicious user at one of the plurality of client computing devices 12(1)-12(n). If the network traffic manager apparatus 14 determines that the packet is from the malicious user at one of the plurality of client computing devices 12(1)-12(n), the network traffic manager apparatus 14 can move to step 215. In other examples, the network traffic manager apparatus 14 can identify other types of requests (apart from SSH requests) for other default ports known in the art. The network traffic manager apparatus 14 can then compare the other types of requests to the port numbers of the destination ports to determine if the requests were sent to non-standard destination ports.

In another example, if the network traffic manager apparatus 14 determines that the type of request matches the services provided at the destination port (i.e., the SSH request was sent to the destination port of port 22 which is the default port for SSH services), then the network traffic manager apparatus 14 can determine that the packet is not from the malicious user and is legitimate traffic. If the network traffic manager apparatus 14 determines that the packet is a legitimate request, then the network traffic manager apparatus 14 can move to step 225.

In step 215, if the network traffic manager apparatus 14 determines that the packet is from a malicious user at one of the plurality of client computing devices 12(1)-12(n), then the network traffic manager apparatus 14 can transmit the packet to a honeypot process from among a plurality of honeypot processes 22(1)-22(n). For example, each of the plurality of honeypot processes 22(1)-22(n) may be configured to serve as a decoy for a specific port and can perform services typically provided at the specific port of a server at one of the plurality of servers 16(1)-16(n) (a SSH honeypot process for requests arriving at destination port 22, a FTP honeypot process for requests arriving at destination port 21, a HTTP honeypot process for requests arriving at destination port 80, a IMAP honeypot process for requests arriving at destination port 143, a HTTPS honeypot process for requests arriving at destination port 443, etc.). In one non-limiting example, one of the plurality of honeypot processes 22(1)-22(n) can be a HTTPS honeypot process configured to receive requests and generate responses to establish secure HTTPS connections to act as a decoy for port 443 (the default port for HTTPS services as described above). The HTTPS honeypot process can be open and accessible for HTTPS connections to be established. If the packet is for SSH services (as described in step 210, and should have been sent to port 22 for SSH services, but instead was sent by a malicious user to port 443), then the network traffic manager apparatus 14 can send the request to the HTTPS honeypot process to make the malicious user believe that the port is processing the SSH request at port 22. The plurality of honeypot processes 22(1)-22(n) can have the same IP address as the server at one of the plurality of servers 16(1)-16(n), so that the malicious user at one of the plurality of client computing devices 12(1)-12(n) believes the destination port is handling the services for the packet.

In step 220, the network traffic manager apparatus 14 receives, from the honeypot process from among the plurality of honeypot processes 22(1)-22(n), logs of interactions with the user at one of the plurality of client computing devices 12(1)-12(n) and the exemplary process ends at step 240. Each of plurality of honeypot processes 22(1)-22(n) can have a mechanism to send logs to the network traffic manager apparatus 14 or to a repository or database that can later be analyzed. The network traffic manager apparatus 14 can capture reconnaissance from the honeypot process by analyzing the logs of interactions that the honeypot process completed with the user. The network traffic manager apparatus 14 can analyze interaction data in the logs to determine what internal data the malicious user was trying to access. The interaction data can be compared to other historical interaction data to determine if the network has been previously attacked by the user at one of the plurality of client computing devices 12(1)-12(n). Additionally, the interaction data can help find vulnerabilities in the network that need further protection.

In step 225, the network traffic manager apparatus 14 transmits the packet to the server at one of the plurality of servers 16(1)-16(n) when the network traffic manager apparatus 14 determines that the packet is not from a malicious user at one of the plurality of client computing devices 12(1)-12(n). If the packet is transmitted to the server at one of the plurality of servers 16(1)-16(n), this indicates that the packet is legitimate traffic and the server at one of the plurality of servers 16(1)-16(n) and the network traffic manager apparatus 14 can treat the request as a legitimate request and interact with the user at the one of the client computing devices 12(1)-12(n) as known in the art (or as further described in step 230).

In some examples, the network traffic manager apparatus 14 does not transmit the packet to the server at one of the plurality of servers 16(1)(-16(n). When the packet is detected by the listener as having arrived at the destination port of the server at one of the plurality of servers 16(1)(-16(n) and the network traffic manager apparatus 14 then determines that the user that sent the packet is not a malicious user, in some examples, the network traffic manager apparatus 14 can allow the destination port to handle the services for the packet without further intervention. In this example, the network traffic manager apparatus 14 can serve as a security tool by using the listener to detect the malicious packets and to reroute the malicious packets, while allowing the legitimate traffic to flow through the destination port without intervention.

In step 230, the network traffic manager apparatus 14 receives a response from the server at one of the plurality of servers 16(1)-16(n). In some examples, the response can indicate that a transaction or handshake is complete. And in step 235, the network traffic manager apparatus 14 transmits the response to the user at one of the plurality of client computing devices 12(1)-12(n) and the exemplary process ends at step 240. The network traffic manager apparatus 14 can then receive additional messages from the one of the client computing devices 12(1)-12(n) and send the received additional messages to the one of the servers 16(1)-16(n). The network traffic manager apparatus 14 can also receive additional messages from the one of the servers 16(1)-16(n) and send the received additional messages to the client computing device 12(1).

Having thus described the basic concept of the technology, it will be rather apparent to those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the technology. Additionally, the recited order of processing elements or sequences, or the use of numbers, letters, or other designations, therefore, is not intended to limit the claimed processes to any order except as may be specified in the claims. Accordingly, the technology is limited only by the following claims and equivalents thereto.

## Claims

1. A method for capturing reconnaissance traffic, the method implemented by a network traffic management system comprising one or more network traffic apparatuses, client devices, or server devices, the method comprising:
detecting, using a listener, a receipt of a packet from a user at a destination port of a server;
determining whether the packet is from a malicious user based on characteristics of the packet and services provided at the destination port; and
in response to determining that the packet is from the malicious user, transmitting the packet to a honeypot process to capture reconnaissance of the packet, wherein the honeypot process is configured to interact with the user.

2. The method according to claim 1, wherein the listener is created automatically when the server is created and is an all ports listener configured to detect traffic directed to ports of the server.

3. The method according to claim 1 or 2, wherein the server and the honeypot process have a same IP address.

4. The method according to one or more of the previous claims 1 - 3, further comprising:
receiving, from the honeypot process, logs of interactions with the user,
wherein the logs comprise a source IP address, SSH fingerprint, attempted username, attempted password, commands, file uploads, or combinations thereof from the packet or the interactions.

5. The method according to one or more of the previous claims 1 - 4, wherein the honeypot process is selected from among a plurality of honeypot processes, wherein a portion of the plurality of honeypot processes correspond to ports of the server, and wherein the honeypot process that is selected for the transmission of the packet corresponds to the destination port of the server.

6. A non-transitory computer readable medium having stored thereon instructions comprising executable code which when executed by one or more processors, causes the processors to carry out the steps of the method according to one or more of the claims 1 to 5.

7. A network traffic manager apparatus, comprising memory comprising programmed instructions stored in the memory and one or more processors configured to be capable of executing the programmed instructions stored in the memory to carry out the method according to one or more of the claims 1 to 5.

8. A network traffic management system, comprising one or more traffic management apparatuses, client devices, or server devices, the network traffic management system comprising memory comprising programmed instructions stored thereon and one or more processors configured to be capable of executing the stored programmed instructions to carry out the method according to one or more of claims 1 to 5.
